# EUROPEAN PATENT APPLICATION

(11) **EP 4 723 579 A1**
(43) Date of publication of application: **08.04.2026**
(21) Application number: 24818474.9
(22) Date of filing: 17.05.2024
(51) Int. Cl.: H04L 45/00, H04L 45/741

(54) **SRV6 DATA PACKET FORWARDING METHOD, APPARATUS AND STORAGE MEDIUM**

(30) Priority: 05.06.2023 CN 202310659789
(71) Applicant: Datang Mobile Communications Equipment Co., Ltd., Beijing 100085 (CN)
(72) Inventor: CAO, Caihong, Beijing 100085 (CN); LIU, Qiang, Beijing 100085 (CN)
(74) Representative: Studio Torta S.p.A.
(86) International application number: PCT/CN2024/093827
(87) International publication number: WO 2024/250941

(57) **Abstract**

Provided in the present disclosure are an SRv6 data packet forwarding method, an apparatus and a storage medium. The method comprises: decapsulating an SRv6 data packet to obtain a user data message; re-encapsulating the user data message, wherein the re-encapsulated SRv6 data packet comprises a new IPv6 header, or a new IPv6 header and a new segment routing header (SRH); and forwarding the re-encapsulated SRv6 data packet to a next-hop node.

## Description

### CROSS-REFERENCES TO RELATED APPLICATIONS

The present application claims priority to the Chinese patent application No. 202310659789.0, filed on June 5, 2023, entitled "SRv6 data packet forwarding method, apparatus and storage medium", which is incorporated herein by reference in its entirety.

### FIELD

The present application relates to the field of communication, and in particular to an SRv6 data packet forwarding method, an apparatus, and a storage medium.

### BACKGROUND

Segment routing internet protocol version 6 (SRv6) refers to a segment routing based on the internet protocol version 6 (IPv6) forwarding plane, and is a next-generation internet protocol (IP) bearer protocol. SRv6 uses the existing IPv6 forwarding technology and implements network programmability through flexible IPv6 extension headers. SRv6 simplifies the network protocol types, and has good scalability and programmability, which may meet diverse demands of more new services, provide high reliability, and has good application prospects in cloud services.

However, the current SRv6 segment identifier (SID) behavior is to decapsulate a data packet and then forward it to a specified forwarding table for forwarding, or to insert a segment routing header (SRH) into the SRv6 data packet header, which does not allow for decapsulation and then re-encapsulation of the data packet. This increases the complexity of session and user plane traffic management, especially in scenarios such as edge computing and distributed networks based on SRv6.

### BRIEF SUMMARY

The present application provides a segment routing internet protocol version 6 (SRv6) data packet forwarding method, an apparatus, and a storage medium, for solving the problem of high complexity of SRv6 policy in related art.

According to an embodiment of the present application, there is provided an SRv6 data packet forwarding method, performed by an SRv6 node, including:
decapsulating an SRv6 data packet to obtain a user data message, where the decapsulating refers to removing an internet protocol version 6 (IPv6) header from an SRv6 data packet header or removing an IPv6 header and a segment routing header (SRH) from the SRv6 data packet;
re-encapsulating the user data message, where a re-encapsulated SRv6 data packet includes a new IPv6 header, or a new IPv6 header and a new SRH, and the new SRH is configured to indicate a new forwarding path for the re-encapsulated SRv6 data packet; and
forwarding the re-encapsulated SRv6 data packet to a next-hop node.

In some embodiments, re-encapsulating the user data message includes:
encapsulating an address of the SRv6 node or a source address of the IPv6 header of the SRv6 data packet header before decapsulation as a source address of the new IPv6 header, encapsulating a segment identifier (SID) of the next-hop node in a segment list as a destination address of the new IPv6 header, and encapsulating the user data message with the new SRH.

In some embodiments, encapsulating the user data message with the new SRH includes:
encapsulating all segment lists into the new SRH to obtain the re-encapsulated SRv6 data packet.

In some embodiments, encapsulating the user data message with the new SRH includes:
encapsulating SIDs in the segment list except the SID of the next-hop node into the new SRH.

In some embodiments, re-encapsulating the user data message includes:
encapsulating an address of the SRv6 node or a source address of the IPv6 header of the SRv6 data packet header before decapsulation as a source address of the new IPv6 header, encapsulating an SID of the next-hop node in a segment list as a destination address of the new IPv6 header, and
not encapsulating the SRH in a case where one SID is included in the segment list.

In some embodiments, re-encapsulating the user data message includes:
submitting the user data message to a specified SRv6 forwarding table; and
encapsulating the user data message with the new IPv6 header, or the new IPv6 header and the new SRH based on the SRv6 forwarding table, where the SRv6 forwarding table includes a data packet matching rule and an SRv6 processing instruction, and the SRv6 processing instruction is used to indicate an encapsulation of the user data message.

In some embodiments, re-encapsulating the user data message includes:
submitting the user data message to a logical interface; and
encapsulating the user data message with the new IPv6 header, or the new IPv6 header and the new SRH based on the logical interface.

In some embodiments, encapsulating the user data message with the new IPv6 header, or the new IPv6 header and the new SRH based on the logical interface, includes:
encapsulating the user data message with the new IPv6 header, or the new IPv6 header and the new SRH based on an SRv6 forwarding table corresponding to the logical interface; where the SRv6 forwarding table includes a data packet matching rule and an SRv6 processing instruction, and the SRv6 processing instruction is used to indicate an encapsulation of the user data message.

In some embodiments, the SRv6 node is a branching point user plane function (UPF) network element or an uplink classifier UPF network element in an edge computing scenario of a mobile network.

In some embodiments, the SRv6 node is a node in a distributed network unit or an autonomous domain in a distributed network scenario.

In some embodiments, the SRv6 node is a visited user plane function (V-UPF) network element or a home user plane function (H-UPF) network element between public land mobile networks (PLMNs) in a roaming scenario based on an SRv6 user plane.

According to an embodiment of the present application, there is provided an SRv6 node, including a memory, a transceiver, and a processor, where
the memory is configured to store a computer program; the transceiver is configured to receive and transmit data under the control of the processor; and the processor is configured to read the computer program in the memory and perform following operations:
decapsulating an SRv6 data packet to obtain a user data message, where the decapsulating refers to removing an IPv6 header from an SRv6 data packet header or removing an IPv6 header and an SRH from the SRv6 data packet;
re-encapsulating the user data message, where a re-encapsulated SRv6 data packet includes a new IPv6 header, or a new IPv6 header and a new SRH, and the new SRH is configured to indicate a new forwarding path for the re-encapsulated SRv6 data packet; and
forwarding the re-encapsulated SRv6 data packet to a next-hop node.

In some embodiments, re-encapsulating the user data message includes:
encapsulating an address of the SRv6 node or a source address of the IPv6 header of the SRv6 data packet header before decapsulation as a source address of the new IPv6 header, encapsulating an SID of the next-hop node in a segment list as a destination address of the new IPv6 header, and encapsulating the user data message with a new SRH.

In some embodiments, encapsulating the user data message with the new SRH includes:
encapsulating all segment lists into the new SRH to obtain the re-encapsulated SRv6 data packet.

In some embodiments, encapsulating the user data message with the new SRH includes:
encapsulating SIDs in the segment list except the SID of the next-hop node into the new SRH.

In some embodiments, re-encapsulating the user data message includes:
encapsulating an address of the SRv6 node or a source address of the IPv6 header of the SRv6 data packet header before decapsulation as a source address of the new IPv6 header, encapsulating an SID of the next-hop node in a segment list as a destination address of the new IPv6 header, and
not encapsulating the SRH in a case where one SID is included in the segment list.

In some embodiments, re-encapsulating the user data message includes:
submitting the user data message to a specified SRv6 forwarding table; and
encapsulating the user data message with the new IPv6 header, or the new IPv6 header and the new SRH based on the SRv6 forwarding table, where the SRv6 forwarding table includes a data packet matching rule and an SRv6 processing instruction, and the SRv6 processing instruction is used to indicate an encapsulation of the user data message.

In some embodiments, re-encapsulating the user data message includes:
submitting the user data message to a logical interface; and
encapsulating the user data message with the new IPv6 header, or the new IPv6 header and the new SRH based on the logical interface.

In some embodiments, encapsulating the user data message with the new IPv6 header, or the new IPv6 header and the new SRH based on the logical interface, includes:
encapsulating the user data message with the new IPv6 header, or the new IPv6 header and the new SRH based on an SRv6 forwarding table corresponding to the logical interface; where the SRv6 forwarding table includes a data packet matching rule and an SRv6 processing instruction, and the SRv6 processing instruction is used to indicate an encapsulation of the user data message.

In some embodiments, the SRv6 node is a branching point UPF network element or an uplink classifier UPF network element in an edge computing scenario of a mobile network.

In some embodiments, the SRv6 node is a node in a distributed network unit or an autonomous domain in a distributed network scenario.

In some embodiments, the SRv6 node is a V-UPF network element or a H-UPF network element between PLMNs in a roaming scenario based on an SRv6 user plane.

According to an embodiment of the present application, there is provided an SRv6 data packet forwarding apparatus, including:
a first decapsulating module, configured to decapsulate an SRv6 data packet to obtain a user data message, where the decapsulating refers to removing an IPv6 header from an SRv6 data packet header or removing an IPv6 header and an SRH from the SRv6 data packet;
a first encapsulating module, configured to re-encapsulate the user data message, where a re-encapsulated SRv6 data packet includes a new IPv6 header, or a new IPv6 header and a new SRH, and the new SRH is configured to indicate a new forwarding path for the re-encapsulated SRv6 data packet; and
a first forwarding module, configured to forward the re-encapsulated SRv6 data packet to a next-hop node.

In some embodiments, the first encapsulating module includes a first encapsulation submodule, where:
the first encapsulating submodule is configured to encapsulate an address of an SRv6 node or a source address of the IPv6 header of the SRv6 data packet header before decapsulation as a source address of the new IPv6 header, encapsulate an SID of the next-hop node in a segment list as a destination address of the new IPv6 header, and encapsulate the user data message with the new SRH.

In some embodiments, the first encapsulating submodule includes a first encapsulation unit, where:
the first encapsulating unit is configured to encapsulate all segment lists into the new SRH to obtain the re-encapsulated SRv6 data packet.

In some embodiments, the first encapsulating submodule includes a second encapsulating unit; and in which:
the second encapsulating unit is configured to encapsulate SIDs in the segment list except the SID of the next-hop node into the new SRH.

In some embodiments, the first encapsulating module includes a second encapsulation submodule, where:
the second encapsulating submodule is configured to encapsulate an address of an SRv6 node or a source address of the IPv6 header of the SRv6 data packet header before decapsulation as a source address of the new IPv6 header, encapsulate an SID of the next-hop node in a segment list as a destination address of the new IPv6 header, and
not encapsulate the SRH in a case where one SID is included in the segment list.

In some embodiments, the first encapsulating module includes a first processing submodule and a third encapsulation submodule, where:
the first processing submodule is configured to submit the user data message to a specified SRv6 forwarding table; and
the third encapsulating submodule is configured to encapsulate the user data message with the new IPv6 header, or the new IPv6 header and the new SRH based on the SRv6 forwarding table; where the SRv6 forwarding table includes a data packet matching rule and an SRv6 processing instruction, and the SRv6 processing instruction is used to indicate an encapsulation of the user data message.

In some embodiments, the first encapsulating module includes a second processing submodule and a fourth encapsulation submodule, where:
the second processing submodule is configured to submit the user data message to a logical interface; and
the fourth encapsulating submodule is configured to encapsulate the user data message with the new IPv6 header, or the new IPv6 header and the new SRH based on the logical interface.

In some embodiments, the fourth encapsulating submodule includes a third encapsulation unit, where:
the third encapsulating unit is configured to encapsulate the user data message with the new IPv6 header, or the new IPv6 header and the new SRH based on a SRv6 forwarding table corresponding to the logical interface; where the SRv6 forwarding table includes a data packet matching rule and an SRv6 processing instruction, and the SRv6 processing instruction is used to indicate an encapsulation of the user data message.

In some embodiments, the SRv6 node is a branching point UPF network element or an uplink classifier UPF network element in an edge computing scenario of a mobile network.

In some embodiments, the SRv6 node is a node in a distributed network unit or an autonomous domain in a distributed network scenario.

In some embodiments, the SRv6 node is a V-UPF network element or a H-UPF network element between PLMNs in a roaming scenario based on an SRv6 user plane.

According to an embodiment of the present application, there is provided a processor-readable storage medium storing a computer program, and the computer program is configured to cause a processor to execute the SRv6 data packet forwarding method described above.

According to an embodiment of the present application, there is further provided a computer-readable storage medium storing a computer program, and the computer program is configured to cause a computer to execute the SRv6 data packet forwarding method described above.

According to an embodiment of the present application, there is further provided a communication device-readable storage medium storing a computer program, and the computer program is configured to cause a communication device to execute the SRv6 data packet forwarding method described above.

According to an embodiment of the present application, there is further provided a chip product-readable storage medium storing a computer program, and the computer program is configured to cause a chip product to execute the SRv6 data packet forwarding method described above.

According to an embodiment of the present application, there is provided an SRv6 data packet forwarding method, an apparatus and a storage medium, which decapsulates the SRv6 data packet and then re-encapsulates a new IPv6 header or re-encapsulates a new IPv6 header and a new SRH by defining the behavior of a new SRv6 node, so that the processing behavior of first decapsulating and then encapsulating the SRv6 data packet may be implemented on one SRv6 node, thereby simplifying the SRv6 policy design and reducing the complexity of the SRv6 policy.

### BRIEF DESCRIPTION OF THE DRAWINGS

In order to clearly illustrate the solutions in the embodiments of the present application or the related art, the accompanying drawings used in the description of the embodiments or the related art are briefly introduced below. It should be noted that the drawings in the following description are only some embodiments of the present application. For those of ordinary skill in the art, other drawings may be obtained based on these drawings without creative effort.
FIG. 1 is a flow chart of an SRv6 data packet forwarding method according to an embodiment of the present application;
FIG. 2 is a signaling interaction diagram of an SRv6 data packet forwarding method according to an embodiment of the present application;
FIG. 3 is a structural schematic diagram of an SRv6 data packet forwarding method in a distributed network according to an embodiment of the present application;
FIG. 4 is a structural schematic diagram of an SRv6 node according to an embodiment of the present application; and
FIG. 5 is a structural schematic diagram of an SRv6 data packet forwarding apparatus according to an embodiment of the present application.

### DETAILED DESCRIPTION

In an edge computing scenario based on SRv6, it is necessary for the branching point to determine the forwarding behavior for a user data packet according to the user data message of the terminal, such as routing the user data packet to the edge or the center. Therefore, it is necessary for the branching point to decapsulate the outer layer of the user data packet header, consisting of IPv6 and the segment routing header (SRH), to expose the original user data packet, and then determine the next-hop of the user data packet based on the filtering rule for the user data packet, and encapsulate a new SRH. Alternatively, in some scenarios, it is necessary for the node with SRv6 policy to decapsulate IPv6 and SRH, and then encapsulate a new IPv6 and a new SRH based on the processing logic of the user data packet. For example, in a distributed network, for the purpose of network security, when the data is routed out of the current distributed node, the segment list in the SRv6 data packet should be stripped, and then the user data packet is encapsulated with an IPv6 and SRH containing the segment list up to another distributed node based on the forwarding behavior. In an embodiment of the present application, the user data packet refers to the SRv6 data packet.

However, the current SRv6 SID behavior is to decapsulate the data packet and then forward it to a specified forwarding table for forwarding, or to insert an SRH into the SRv6 data packet header, which does not allow for decapsulation and then re-encapsulation of the data packet. This increases the complexity of session and user plane traffic management, especially in scenarios such as edge computing and distributed networks based on SRv6.

Based on the above issues, according to an embodiment of the present application, there is provided an SRv6 data packet forwarding method, which may simplify the SRv6 policy and reduce the complexity of the SRv6 policy.

**In** order to make the purposes, solutions and advantages of the embodiments of the present application clearer, the solutions in the embodiments of the present application will be clearly and completely described below in conjunction with the drawings in the embodiments of the present application. Obviously, the described embodiments are only part of the embodiments of the present application, not all of the embodiments. Based on the embodiments in the present application, all other embodiments obtained by those of ordinary skill in the art without creative effort are within the protection scope of the present application.

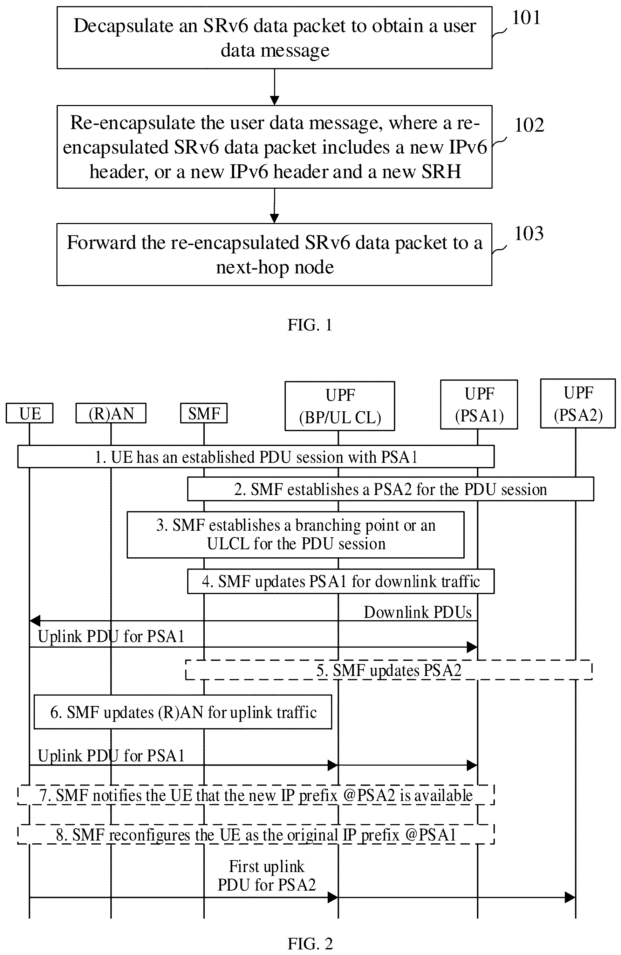

FIG. 1 is a flow chart of an SRv6 data packet forwarding method according to an embodiment of the present application. As shown in FIG. 1, according to an embodiment of the present application, there is provided an SRv6 data packet forwarding method, the execution subject of which may be an SRv6 node, such as a terminal, a network device, and the like. The method includes the following steps.

Step 101: decapsulating an SRv6 data packet to obtain a user data message, where the decapsulating refers to removing an internet protocol version 6 (IPv6) header from an SRv6 data packet header or removing an IPv6 header and an SRH from the SRv6 data packet.

In an embodiment, the SRv6 node may be a terminal or a network device. After receiving the SRv6 data packet sent by the previous node, the SRv6 data packet may be decapsulated according to the SRv6 behavior instruction, the IPv6 header of the SRv6 data packet header, or the IPv6 header and the SRH of the SRv6 data packet may be removed to obtain the user data message.

For example, the SRv6 node may be a terminal. After receiving the SRv6 data packet sent by the previous node, the IPv6 header of the SRv6 data packet header may be removed.

For example, the SRv6 node may be a base station. After receiving the SRv6 data packet sent by the previous node, the IPv6 header and the SRH of the SRv6 data packet may be removed.

Step 102: re-encapsulating the user data message, where a re-encapsulated SRv6 data packet includes a new IPv6 header, or a new IPv6 header and a new SRH, and the new SRH is configured to indicate a new forwarding path for the re-encapsulated SRv6 data packet.

In an embodiment, after the SRv6 node decapsulates the SRv6 data packet, the user data message may be re-encapsulated according to the SRv6 behavior instruction, a new IPv6 header may be encapsulated for the user data message, or a new IPv6 header and a new SRH may be encapsulated for the user data message. The new SRH may indicate a new forwarding path for the re-encapsulated SRv6 data packet, and the forwarding path may contain one or more SIDs.

For example, the SRv6 node may be a UPF (user plane function) network element, which may first decapsulate the received SRv6 data packet to obtain the user data message, and then encapsulate the user data message with a new IPv6 header.

For example, the SRv6 node may be a RAN (radio access network) network element, which may first decapsulate the received SRv6 data packet to obtain the user data message, and then encapsulate the user data message with a new IPv6 header and a new SRH.

Step 103: forwarding the re-encapsulated SRv6 data packet to a next-hop node.

In an embodiment, the SRv6 node may forward the re-encapsulated SRv6 data packet to the next-hop node according to the SID of the next-hop node in the re-encapsulated new IPv6 header or the new SRH.

According to an embodiment of the present application, there is provided an SRv6 data packet forwarding method, in which the SRv6 data packet may be decapsulated and then a new IPv6 header may be re-encapsulated or a new IPv6 header and a new SRH may be re-encapsulated by defining the behavior of a new SRv6 node, so that the processing behavior of first decapsulating and then encapsulating the SRv6 data packet may be implemented on one SRv6 node, thereby simplifying the SRv6 policy design and reducing the complexity of the SRv6 policy.

In some embodiments, re-encapsulating the user data message includes:
encapsulating an address of the SRv6 node or a source address of the IPv6 header of the SRv6 data packet header before decapsulation as a source address of the new IPv6 header, encapsulating an SID of the next-hop node in a segment list as a destination address of the new IPv6 header, and encapsulating the user data message with the new SRH.

In an embodiment, the behavior of a new SRv6 node may be defined so that after the SRv6 node decapsulates the SRv6 data packet, it may re-capsulate the user data message according to the SRv6 behavior instruction. Generally, the IPv6 header includes a source address (SA), and a destination address (DA). When encapsulating a new IPv6 header, for the source address in the IPv6 header, the address of the current SRv6 node itself may be used as the source address of the new IPv6 header, or the source address of the IPv6 header of the SRv6 data packet header before decapsulation may be encapsulated as the source address of the new IPv6 header; for the destination address in the IPv6 header, the SID of the next-hop node in the segment list may be encapsulated as the destination address of the new IPv6 header. A new SRH may be encapsulated.

For example, the behavior of a new SRv6 node may be End.D.Encaps.

The user data message is (A, Z), B is the SID on the source node A, and B is the source address of the SRv6 data packet. When node N receives an IPv6 data packet with a destination address S, and S is the End.D.Encaps SID:
the SRv6 data packet received by node N is:
   (B, S)(S, M, N; SL=0)(A, Z);
when the source address of the IPv6 header of the SRv6 data packet header before decapsulation is encapsulated as the source address of the new IPv6 header, and the SID of the next-hop node in the segment list is encapsulated as the destination address of the new IPv6 header, the SRv6 data packet after processed by node N may be:
   (B, S1)(S2, S1; SL=1)(A, Z)
or, when the address of the current SRv6 node itself is used as the source address of the new IPv6 header, and the SID of the next-hop node in the segment list is encapsulated as the destination address of the new IPv6 header, the SRv6 data packet after processed by node N may be:
   (S, S1)(S2, S1; SL=1)(A, Z)

After receiving the SRv6 data packet, node N decapsulates the IPv6 header and SRH in the outer layer, matches the user data message with the specified processing logic, and then re-capsulates the new IPv6 header and SRH and forwards it.

According to an embodiment of the present application, there is provided an SRv6 data packet forwarding method, in which multiple ways are provided for encapsulating a new IPv6 header by defining the behavior of a new SRv6 node, so that the processing behavior of first decapsulating and then encapsulating the SRv6 data packet may be implemented on one SRv6 node, thereby adapting to the demands under different scenarios and reducing the complexity of the SRv6 policy.

In some embodiments, encapsulating the user data message with the new SRH includes:
encapsulating all segment lists into the new SRH to obtain the re-encapsulated SRv6 data packet.

In an embodiment, after the SRv6 node decapsulates the SRv6 data packet, the user data message may be re-capsulated according to the SRv6 behavior instruction. Generally, the SRH contains a segment list and a segment left (SL). When encapsulating a new SRH, the entire segment list may be encapsulated into the new SRH.

According to an embodiment of the present application, there is provided an SRv6 data packet forwarding method, in which all segment lists may be encapsulated into a new SRH by defining the behavior of a new SRv6 node when encapsulating the new SRH, so that the processing behavior of first decapsulating and then encapsulating the SRv6 data packet may be implemented on one SRv6 node, thereby reducing the complexity of the SRv6 policy.

In some embodiments, encapsulating the user data message with the new SRH includes:
encapsulating SIDs in the segment list except the SID of the next-hop node into the new SRH.

In an embodiment, after the SRv6 node decapsulates the SRv6 data packet, the user data message may be re-encapsulated according to the SRv6 behavior instruction. In the case of encapsulating the SID of the next-hop node in the segment list as the destination address of the new IPv6 header, it is not necessary to encapsulate all segment lists into a new SRH, and the SIDs in the segment list except the SID of the next-hop node can be encapsulated into the new SRH.

For example, the behavior of a new SRv6 node may be defined as End.D.Encaps.Red (End.D.Encaps with Reduced Encapsulation), which is optimized on End.D.Encaps.

The user data message is (A, Z), B is the SID on the source node A, and B is the source address of the SRv6 data packet.

The SRv6 data packet received by node N is:
(B, S)(S, M, N, S; SL=0)(A, Z).

When the SIDs in the segment list except the SID of the next-hop node are encapsulated into the new SRH, the data packet after processed by node N is:
(B, S1)(S2; SL=1)(A, Z)

According to an embodiment of the present application, there is provided an SRv6 data packet forwarding method, in which the SIDs in the segment list except the SID of the next-hop node may be encapsulated into a new SRH by defining the behavior of a new SRv6 node when encapsulating the new SRH, thereby reducing the length of the SRH and saving communication resources.

In some embodiments, re-encapsulating the user data message includes:
encapsulating an address of the SRv6 node or a source address of the IPv6 header of the SRv6 data packet header before decapsulation as a source address of the new IPv6 header, encapsulating an SID of the next-hop node in a segment list as a destination address of the new IPv6 header, and
not encapsulating the SRH in a case where one SID is included in the segment list.

In an embodiment, after the SRv6 node decapsulates the SRv6 data packet, the user data message may be re-encapsulated according to the SRv6 behavior instruction. In the case of encapsulating the SID of the next-hop node in the segment list as the destination address of the new IPv6 header, if the segment list contains only one SID, only the new IPv6 header may be encapsulated without encapsulating the SRH.

According to an embodiment of the present application, there is provided an SRv6 data packet forwarding method, in which, if the segment list contains only one SID, only the SID is encapsulate into a new IPv6 header without encapsulating the SRH, by defining the behavior of a new SRv6 node, thereby saving communication resources.

In some embodiments, re-encapsulating the user data message includes:
submitting the user data message to a specified SRv6 forwarding table; and
encapsulating the user data message with the new IPv6 header, or the new IPv6 header and the new SRH based on the SRv6 forwarding table, where the SRv6 forwarding table includes a data packet matching rule and an SRv6 processing instruction, and the SRv6 processing instruction is used to indicate an encapsulation of the user data message.

In an embodiment, in the related art, the SRv6 data packet is decapsulated and then forwarded to the corresponding forwarding table for forwarding, while the existing forwarding table may only match and forward the user data massage, but may not perform corresponding SRv6 processing on the user data massage. Therefore, a new SRv6 forwarding table may be defined, and the new SRv6 forwarding table may include a data packet matching rule and an SRv6 processing instruction. After the SRv6 node decapsulates the SRv6 data packet, the user data massage may be forwarded to a specified SRv6 forwarding table for processing. After the SRv6 forwarding table receives the user data massage, the user data massage may be encapsulated according to the SID behavior of the existing source node, or a new SRv6 behavior may be defined. The difference between the new SRv6 behavior and the existing H.Encaps is that after encapsulating the SRv6 data packet, the source address of the IPv6 header encapsulated by the new SRv6 behavior is not the address of the current node, but is the source address of the originally received SRv6 data packet, which may be used to determine the source of the data packet.

For example, a new SRv6 behavior may be End.Encaps.

After the current device N receives the data packet (S1, S2)(M, S2, SL = 1)(A, Z), the data packet is decapsulated into (A, Z) after processed by the forwarding table 1 and forwarded to the forwarding table 2. If the forwarding table 2 conducts process using H.Encaps, the data packet is re-encapsulated into (N, S3)(S3, X, SL = 0)(A, Z).

If the forwarding table 2 conducts process using End.Encaps, the data packet may be re-encapsulated into (S1, S3)(S3, X, SL=0)(A, Z).

The source addresses of the two ways are different. The latter is convenient for tracing the source because node N is the intermediate node of the current SRv6 policy.

According to an embodiment of the present application, there is provided an SRv6 data packet forwarding method, in which the SRv6 data packet may be decapsulated and then a new IPv6 header may be re-encapsulated or a new IPv6 header and a new SRH may be re-encapsulated by defining a new SRv6 forwarding table, so that the processing behavior of first decapsulating and then encapsulating the SRv6 data packet may be implemented on one SRv6 node, thereby simplifying the SRv6 policy design and reducing the complexity of the SRv6 policy.

In some embodiments, re-encapsulating the user data message includes:
submitting the user data message to a logical interface; and
encapsulating the user data message with the new IPv6 header, or the new IPv6 header and the new SRH based on the logical interface.

In an embodiment, in the related art, after the SRv6 data packet is decapsulated, it may be forwarded from a specified adjacent interface in layer 2 or layer 3. Therefore, a new logical interface may be defined. After the SRv6 data packet is decapsulated, the user data message may be forwarded to a specified logical interface, and the newly defined forwarding table or the previous forwarding table is applied to match the user data message again at the logical interface.

For example, a new SID behavior may be defined, and the new SID behavior may be End.DXSRv6. After the SRv6 data packet is decapsulated, the user data message may be forwarded to a specified logical interface, and the logical interface then forwards the user data message to the forwarding table. The forwarding table herein may be a newly defined forwarding table or a previous forwarding table. Then, according to the forwarding behavior in the forwarding table, a new IPv6 header is encapsulated for the data packet, or a new IPv6 header and a new SRH are encapsulated for the data packet.

According to an embodiment of the present application, there is provided an SRv6 data packet forwarding method, in which the SRv6 data packet may be decapsulated and then a new IPv6 header may be re-encapsulated or a new IPv6 header and a new SRH may be re-encapsulated by defining a new logical interface, so that the processing behavior of first decapsulating and then encapsulating the SRv6 data packet may be implemented on one SRv6 node, thereby simplifying the SRv6 policy design and reducing the complexity of the SRv6 policy.

In some embodiments, encapsulating the user data message with the new IPv6 header, or the new IPv6 header and the new SRH based on the logical interface, includes:
encapsulating the user data message with the new IPv6 header, or the new IPv6 header and the new SRH based on an SRv6 forwarding table corresponding to the logical interface; where the SRv6 forwarding table includes a data packet matching rule and an SRv6 processing instruction, and the SRv6 processing instruction is used to indicate an encapsulation of the user data message.

In an embodiment, a new logical interface and a new SRv6 forwarding table may be defined, and the new SRv6 forwarding table may include a packet matching rule and an SRv6 processing instruction. After the SRv6 data packet is decapsulated, the user data message may be forwarded to a specified logical interface, and the logical interface then forwards the user data message to the new SRv6 forwarding table. After receiving the user data message, the new SRv6 forwarding table may perform matching and forwarding processing, and corresponding SRv6 processing on the user data message.

According to an embodiment of the present application, there is provided an SRv6 data packet forwarding method, in which the SRv6 data packet may be decapsulated and then a new IPv6 header may be re-encapsulated or a new IPv6 header and a new SRH may be re-encapsulated by defining a new logical interface and a new SRv6 forwarding table, so that the processing behavior of first decapsulating and then encapsulating the SRv6 data packet may be implemented on one SRv6 node, thereby simplifying the SRv6 policy design and reducing the complexity of the SRv6 policy.

**In** some embodiments, the SRv6 node is a branching point UPF network element or an uplink classifier UPF network element in an edge computing scenario of a mobile network.

**In** an embodiment, in the edge computing scenario of a mobile network, the SRv6 node may be a branching point UPF (BP UPF) network element or an uplink classifier UPF (ULCL UPF) network element. It is necessary for the BP UPF network element or the ULCL UPF network element to decapsulate the data packet and then encapsulate a new data packet header.

FIG. 2 is a signaling interaction diagram of an SRv6 data packet forwarding method according to an embodiment of the present application. As shown in FIG. 2, the behavior of the BP UPF network element may perform corresponding operations according to the method described in the previous embodiment. The specific procedure may be as follows:
apply the newly defined End.D.Encaps SID to the BP UPF network element or the ULCL UPF network element, so that after receiving the SRv6 data packet, the BP UPF network element or the ULCL UPF network element first decapsulates the IPv6 header or decapsulates the IPv6 header and the SRH to obtain the user data message. Then the next-hop behavior of the user data message is determined based on the traffic filtering rule: then the user data message is encapsulated into the IPv6 header of the protocol data unit session anchor (PDU session anchor, PSA) 1 network element or PSA2 network element, or the user data message is encapsulated into the IPv6 header and the SRH.

For example, the user data message is (A, Z).
Uplink:
   RAN_out:
      (gNB, BP/ULCL)(A, Z) H.Encaps.Red
   BP/ULCL_out:
      (BP/ULCL, PSA1/PSA2)(A, Z) End.D.Encaps.Red
   PSA1/PSA2_out:
      (A, Z) End.DT4, End.DT6, End.DT...
   among them, after receiving the uplink data packet, the BP UPF network element or the ULCL UPF network element decapsulates the IPv6 header and the SRH in the outer layer, and determines whether the destination address of the data packet is an edge data network (DN) or a central DN according to the traffic filtering rule, and encapsulates the corresponding segment list into the SRH. If the BP UPF network element or the ULCL UPF network element decapsulates the data packet and determines to route the data packet to the edge DN according to the filtering rule, the segment list from the BP UPF network element or the ULCL UPF network element to the PSA2 network element is encapsulated into the SRH (PSA2 is connected to the edge DN).
Downlink:
   the PSA network element encapsulates the segment list on the path from the PSA network element to the BP UPF network element or the ULCL UPF network element and then to the RAN network element in the SRH.

In addition, this embodiment may be used for the process of modifying the PSA network element based on the IPv6 multi-homed PDU session in session and service continuity (SSC) mode 3. This embodiment may also be used for the process of modifying the IPv6 multi-homed PDU session anchor network element or the PDU session anchor network element attached to the ULCL.

According to an embodiment of the present application, there is provided an SRv6 data packet forwarding method, in which, by defining the behavior of a new SRv6 node, the processing behavior of first decapsulating and then encapsulating the SRv6 data packet may be implemented on one SRv6 node, which may be applied in edge computing scenarios of mobile networks, making SRv6 applicable to more scenarios.

In some embodiments, the SRv6 node is a node in a distributed network unit or an autonomous domain in a distributed network scenario.

In an embodiment, in a distributed network unit or an autonomous domain, since the current distributed network unit or autonomous domain may only manage the node information of the distributed network unit or autonomous domain where it is located, and for the security of the distributed network unit or autonomous domain, the SRv6 policy of each distributed network unit or autonomous domain should not be exposed to the outside. Therefore, when multiple distributed network units or autonomous domains need to work together, the distributed network units or autonomous domains may each plan the SRv6 policy in their respective domains, and the tail node of the current distributed network unit or autonomous domain may decapsulate the current SRH. Then, it is re-encapsulated to the segment list of another distributed node or autonomous domain based on the processing logic. The destination-distributed head node or the autonomous domain head node decapsulates the segment list between the distributed node or autonomous domain, and re-encapsulates the segment list of this distributed node according to the processing logic.

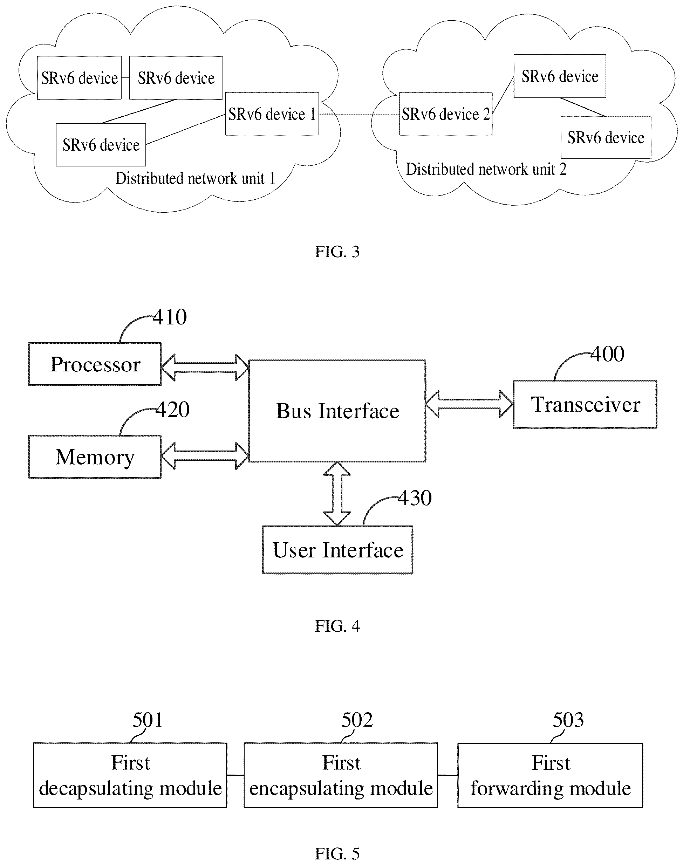

FIG. 3 is a structural schematic diagram of an SRv6 data packet forwarding method in a distributed network according to an embodiment of the present application. As shown in FIG. 3, the SRv6 data packet forwarding method of all the embodiments except for the above embodiments in the application scenarios may be applied in the distributed network scenario. Here, only one of them is used as an example. Both SRv6 device 1 and SRv6 device 2 apply the newly defined End.D.Encaps SID. SRv6 device 1 decapsulates the information about the SRH of this node, and encapsulates it into the segment list of SRv6 device 2 after matching. After receiving the data packet, SRv6 device 2 decapsulates the segment list from SRv6 device 1 to SRv6 device 2, and encapsulates the segment list from this node to the destination.

According to an embodiment of the present application, there is provided an SRv6 data packet forwarding method, in which, by defining the behavior of a new SRv6 node, the processing behavior of first decapsulating and then encapsulating the SRv6 data packet may be implemented on one SRv6 node, which may be applied in distributed network scenarios, making SRv6 applicable to more scenarios.

In some embodiments, the SRv6 node is a V-UPF network element or a H-UPF network element between PLMNs in a roaming scenario based on the SRv6 user plane.

In an embodiment, in a roaming scenario based on the SRv6 user plane, the SRv6 node may be a visited user plane function (V-UPF) network element or a home user plane function (H-UPF) network element between public land mobile networks (PLMNs), and may be applied to the SRv6 data packet forwarding method of all the embodiments except for the above embodiments in the application scenarios.

For example, in a roaming scenario based on the SRv6 user plane, after receiving the SRv6 data packet sent by the previous node, the V-UPF network element may decapsulate the SRv6 data packet according to the SRv6 behavior instruction to obtain the user data message, and then re-capsulate the user data message. The user data message may be encapsulated with a new IPv6 header, or the user data message may be encapsulated with a new IPv6 header and a new SRH.

According to an embodiment of the present application, there is provided an SRv6 data packet forwarding method, in which, by defining the behavior of a new SRv6 node, the processing behavior of first decapsulating and then encapsulating the SRv6 data packet may be implemented on one SRv6 node, which may be applied in roaming scenarios based on the SRv6 user plane, making SRv6 applicable to more scenarios.

FIG. 4 is a structural schematic diagram of an SRv6 node according to an embodiment of the present application. As shown in FIG. 4, the SRv6 node includes a memory 420, a transceiver 400, and a processor 410, where:
the memory 420 is configured to store a computer program; the transceiver 400 is configured to transmit and receive data under the control of the processor 410; and the processor 410 is configured to read the computer program in the memory 420 and perform following operations:
decapsulating an SRv6 data packet to obtain a user data message, where the decapsulating refers to removing an IPv6 header from an SRv6 data packet header or removing an IPv6 header and an SRH from the SRv6 data packet;
re-encapsulating the user data message, where a re-encapsulated SRv6 data packet includes a new IPv6 header, or a new IPv6 header and a new SRH, and the new SRH is configured to indicate a new forwarding path for the re-encapsulated SRv6 data packet; and
forwarding the re-encapsulated SRv6 data packet to a next-hop node.

In an embodiment, in FIG. 4, the bus architecture may include any number of interconnected buses and bridges, specifically linked together by various circuits of one or more processors represented by the processor 410 and a memory represented by the memory 420. The bus architecture may also link various other circuits together such as peripheral device, voltage regulator, and power management circuit, which are well known in the art and are therefore not further described herein. The bus interface provides an interface. The transceiver 400 may include a plurality of components, i.e., including a transmitter and a receiver, providing a unit for communicating with various other devices on a transmission medium, such as a wireless channel, a wired channel, an optical cable, and other transmission media. For different user devices, the user interface 430 may also be an interface capable of externally or internally connecting to required devices, and the connected devices include, but are not limited to, a keypad, a display, a speaker, a microphone, a joystick, and the like.

The processor 410 is responsible for managing the bus architecture and general processing, and the memory 420 may store data used by the processor 410 when performing operations.

In some embodiments, processor 410 may be a central processing unit (CPU), an application specific integrated circuit (ASIC), a field-programmable gate array (FPGA) or a complex programmable logic device (CPLD), and the processor may also employ a multi-core architecture.

The processor calls the computer program stored in the memory to execute any of the methods provided in the embodiments of the present application according to the obtained executable instructions. The processor and the memory may also be physically separated in arrangement.

In some embodiments, re-encapsulating the user data message includes:
encapsulating an address of the SRv6 node or a source address of the IPv6 header of the SRv6 data packet header before decapsulation as a source address of the new IPv6 header, encapsulating an SID of the next-hop node in a segment list as a destination address of the new IPv6 header, and encapsulating the user data message with a new SRH.

In some embodiments, encapsulating the user data message with the new SRH includes:
encapsulating all segment lists into the new SRH to obtain the re-encapsulated SRv6 data packet.

In some embodiments, encapsulating the user data message with the new SRH includes:
encapsulating SIDs in the segment list except the SID of the next-hop node into the new SRH.

In some embodiments, re-encapsulating the user data message includes:
encapsulating an address of the SRv6 node or a source address of the IPv6 header of the SRv6 data packet header before decapsulation as a source address of the new IPv6 header, encapsulating an SID of the next-hop node in a segment list as a destination address of the new IPv6 header, and
not encapsulating the SRH in a case where one SID is included in the segment list.

In some embodiments, re-encapsulating the user data message includes:
submitting the user data message to a specified SRv6 forwarding table; and
encapsulating the user data message with the new IPv6 header, or the new IPv6 header and the new SRH based on the SRv6 forwarding table, where the SRv6 forwarding table includes a data packet matching rule and an SRv6 processing instruction, and the SRv6 processing instruction is used to indicate an encapsulation of the user data message.

In some embodiments, re-encapsulating the user data message includes:
submitting the user data message to a logical interface; and
encapsulating the user data message with the new IPv6 header, or the new IPv6 header and the new SRH based on the logical interface.

In some embodiments, encapsulating the user data message with the new IPv6 header, or the new IPv6 header and the new SRH based on the logical interface, includes:
encapsulating the user data message with the new IPv6 header, or the new IPv6 header and the new SRH based on an SRv6 forwarding table corresponding to the logical interface; where the SRv6 forwarding table includes a data packet matching rule and an SRv6 processing instruction, and the SRv6 processing instruction is used to indicate an encapsulation of the user data message.

In some embodiments, the SRv6 node is a branching point UPF network element or an uplink classifier UPF network element in an edge computing scenario of a mobile network.

In some embodiments, the SRv6 node is a node in a distributed network unit or an autonomous domain in a distributed network scenario.

In some embodiments, the SRv6 node is a V-UPF network element or a H-UPF network element between PLMNs in a roaming scenario based on an SRv6 user plane.

It should be noted that the above-mentioned SRv6 node provided in the embodiment of the present application may implement all the methods and steps implemented by the method embodiments in which the execution subject is the SRv6 node, and may achieve the same effects. The parts of the embodiment that are identical to the embodiments in the method and the beneficial effects thereof will not be described in detail here.

FIG. 5 is a structural schematic diagram of an SRv6 data packet forwarding apparatus according to an embodiment of the present application. As shown in FIG. 5, according to an embodiment of the present application, there is provided an SRv6 data packet forwarding apparatus, including a first decapsulating module 501, a first encapsulating module 502, and a first forwarding module 503, where:
the first decapsulating module 501 is configured to decapsulate an SRv6 data packet to obtain a user data message, where the decapsulating refers to removing an IPv6 header from an SRv6 data packet header or removing an IPv6 header and an SRH from the SRv6 data packet;
the first encapsulating module 501 is configured to re-encapsulate the user data message, where a re-encapsulated SRv6 data packet includes a new IPv6 header, or a new IPv6 header and a new SRH, and the new SRH is configured to indicate a new forwarding path for the re-encapsulated SRv6 data packet; and
the first forwarding module 503 is configured to forward the re-encapsulated SRv6 data packet to a next-hop node.

In some embodiments, the first encapsulating module includes a first encapsulation submodule, where:
the first encapsulating submodule is configured to encapsulate an address of an SRv6 node or a source address of the IPv6 header of the SRv6 data packet header before decapsulation as a source address of the new IPv6 header, encapsulate an SID of the next-hop node in a segment list as a destination address of the new IPv6 header, and encapsulate the user data message with the new SRH.

In some embodiments, the first encapsulating submodule includes a first encapsulation unit, where:
the first encapsulating unit is configured to encapsulate all segment lists into the new SRH to obtain the re-encapsulated SRv6 data packet.

In some embodiments, the first encapsulating submodule includes a second encapsulating unit; where:
the second encapsulating unit is configured to encapsulate SIDs in the segment list except the SID of the next-hop node into the new SRH.

In some embodiments, the first encapsulating module includes a second encapsulation submodule, where:
the second encapsulating submodule is configured to encapsulate an address of an SRv6 node or a source address of the IPv6 header of the SRv6 data packet header before decapsulation as a source address of the new IPv6 header, encapsulate an SID of the next-hop node in a segment list as a destination address of the new IPv6 header, and
not encapsulate the SRH in a case where one SID is included in the segment list.

In some embodiments, the first encapsulating module includes a first processing submodule and a third encapsulation submodule, where:
the first processing submodule is configured to submit the user data message to a specified SRv6 forwarding table; and
the third encapsulating submodule is configured to encapsulate the user data message with the new IPv6 header, or the new IPv6 header and the new SRH based on the SRv6 forwarding table; where the SRv6 forwarding table includes a data packet matching rule and an SRv6 processing instruction, and the SRv6 processing instruction is used to indicate an encapsulation of the user data message.

In some embodiments, the first encapsulating module includes a second processing submodule and a fourth encapsulation submodule, where:
the second processing submodule is configured to submit the user data message to a logical interface; and
the fourth encapsulating submodule is configured to encapsulate the user data message with the new IPv6 header, or the new IPv6 header and the new SRH based on the logical interface.

In some embodiments, the fourth encapsulating submodule includes a third encapsulation unit, where:
the third encapsulating unit is configured to encapsulate the user data message with the new IPv6 header, or the new IPv6 header and the new SRH based on a SRv6 forwarding table corresponding to the logical interface; where the SRv6 forwarding table includes a data packet matching rule and an SRv6 processing instruction, and the SRv6 processing instruction is used to indicate an encapsulation of the user data message.

In some embodiments, the SRv6 node is a branching point UPF network element or an uplink classifier UPF network element in an edge computing scenario of a mobile network.

In some embodiments, the SRv6 node is a node in a distributed network unit or an autonomous domain in a distributed network scenario.

In some embodiments, the SRv6 node is a V-UPF network element or a H-UPF network element between PLMNs in a roaming scenario based on an SRv6 user plane.

In an embodiment, the above-mentioned SRv6 data packet forwarding apparatus provided in the embodiment of the present application may implement all the methods and steps implemented by the method embodiments in which the execution subject is the SRv6 node, and may achieve the same effects. The parts of the embodiment that are identical to the embodiments in the method and the beneficial effects thereof will not be described in detail here.

It should be noted that the division of units/modules in the embodiments of the present application is illustrative and merely represents a logical functional division. In actual implementation, other division ways may be employed. Furthermore, the functional units in various embodiments of the present application may be integrated into a single processing unit, or each unit may exist physically as a separate unit, or two or more units may be integrated into a single unit. The aforementioned integrated units may be implemented in the form of either hardware or a software functional unit.

If the integrated unit is implemented in the form of a software functional unit and sold or used as an independent product, it may be stored in a processor-readable storage medium. Based on this understanding, the solution of the present application, or the part that contributes to the related art, or all or part of the solution may be embodied in the form of a software product. The computer software product is stored in a storage medium and includes several instructions for enabling a computer device (which may be a personal computer, a server, or a network device, and the like.) or a processor to execute all or part of the steps of the method described in each embodiment of the present application. The aforementioned storage medium includes a USB flash drive, a mobile hard disk, a read-only memory (ROM), a random access memory (RAM), a disk or optical disk, and other media that may store program codes.

In some embodiments, there is further provided a computer-readable storage medium storing a computer program, and the computer program is configured to cause a computer to execute the SRv6 data packet forwarding method provided by the above-mentioned method embodiments.

In an embodiment, the above-mentioned computer-readable storage medium provided in the embodiment of the present application may implement all the methods and steps implemented by the method embodiments in which the execution subject is the SRv6 node, and may achieve the same effects. The parts of the embodiment that are identical to the embodiments in the method and the beneficial effects thereof will not be described in detail here.

It should be noted that the computer-readable storage medium may be any available medium or data storage device that can be accessed by the processor, including but not limited to a disk memory (such as a floppy disk, a hard disk, a magnetic tape, a magneto-optical disk (MO), and the like.), an optical memory (such as a CD, a DVD, a BD, a HVD, and the like.), and a semiconductor memory (such as a ROM, a EPROM, a EEPROM, a non-volatile memory (NAND FLASH), and a solid-state drive (SSD)), and the like.

It should also be noted that the terms "first", "second", and the like in the embodiments of the present application are used to distinguish between similar objects, and are not used to describe a specific order or sequence. It should be understood that the terms used in this way may be interchangeable under appropriate circumstances, so that the embodiments of the present application may be implemented in an order other than those illustrated or described herein, and the objects distinguished by "first" and "second" are generally of the same type, and the number of objects is not limited. For example, the first object may be one or more.

In the embodiments of the present application, the term "and/or" describes the association relationship of associated objects, indicating that three relationships may exist. For example, A and/or B may represent three situations: A exists alone, A and B exist at the same time, and B exists alone. The character "/" generally indicates that the previous and next associated objects are in an "or" relationship.

**In** the embodiments of the application, the term "multiple" refers to two or more, and other quantifiers are similar thereto.

The solutions provided by the embodiments of the present application may be applied to a variety of systems, particularly 5G systems. For example, the applicable system may include the global system of mobile communication (GSM) system, the code division multiple access (CDMA) system, the wideband code division multiple access (WCDMA), the general packet radio service (GPRS) system, the long term evolution (LTE) system, the LTE frequency division duplex (FDD) system, the LTE time division duplex (TDD) system, the long term evolution advanced (LTE-A) system, the universal mobile telecommunication system (UMTS), the worldwide interoperability for microwave access (WiMAX) system, and the 5G new radio (NR) system. These various systems include both terminal devices and network devices. The systems may also include core network parts, such as the evolved packet system (EPS) and the 5G system (5GS).

The terminal device in the embodiments of the present application may refer to a device that provide voice and/or data connectivity to users, a handheld device with wireless connectivity, or other processing device connected to a wireless modem, and the like. The name of terminal device may vary in different systems. For example, in 5G systems, a terminal device may be referred to as a user equipment (UE). A wireless terminal device may communicate with one or more core networks (CNs) via a radio access network (RAN). The wireless terminal device may be a mobile terminal device, such as a mobile phone (also known as "cellular" phone), and a computer with a mobile terminal device. For example, it may be a portable, pocket-sized, handheld, computer-built-in, or in-vehicle mobile device that exchanges voice and /or data with the radio access network. Examples include a personal communication service (PCS) phone, a cordless phone, a session initiated protocol (SIP) phone, a wireless local loop (WLL) station, a personal digital assistant (PDA) and the like. The wireless terminal device may also be referred to as a system, a subscriber unit, a subscriber station, a mobile station, a mobile, a remote station, an access point, a remote terminal, an access terminal, a user terminal, a user agent, or a user device, but is not limited in the embodiments of the present application.

The network device involved in the embodiments of the present application may be a base station, which may include multiple cells providing services to terminals. Depending on the specific application scenario, a base station may also be referred to as an access point or may be a device in an access network that communicates with a wireless terminal device via one or more sectors over an air interface, or may be referred to other names. The network device may be used to interchange received air frames with internet protocol (IP) packets, acting as a router between the wireless terminal device and the rest of the access network, which may include an internet protocol (IP) communication network. The network device may also coordinate attribute management of the air interface. For example, the network device in the embodiments of the present application may be a base transceiver station (BTS) in a global system for mobile communication (GSM) or a code division multiple access (CDMA), a Node B in the wide-band code division multiple access (WCDMA), an evolutionary Node B (eNB or e-NodeB) in the long term evolution (LTE) system, a 5G base station (gNB) in the next generation system, a relay node, a femto, and a pico in a home evolved NodeB (HeNB), and the like, and are not limited in the embodiments of the present application. In some network structures, the network device may include a centralized unit (CU) node and a distributed unit (DU) node, and the centralized unit and the distributed unit may also be geographically separated in arrangement.

It should be understood by those skilled in the art that, unless expressly stated, the singular forms "a", "an", "said", and "the" used herein may also include plural forms. It should be further understood that the term "include" used in the specification of the present application refers to the presence of the features, integers, steps, operations, elements, and/or components, but does not exclude the presence or addition of one or more other features, integers, steps, operations, elements, components, and/or combinations thereof. It should be understood that when an element is referred to being "connected" or "coupled" to another element, it may be directly connected or coupled to the another element, or there may be intermediate elements therebetween. In addition, the "connection" or "coupling" used herein may include a wireless connection or a wireless coupling. The term "and/or" used herein includes all or any units and all combinations of one or more associated listed items.

**In** the embodiments of the present application, the term "and/or" describes the association relationship of associated objects, indicating that three relationships may exist. For example, A and/or B may represent three situations: A exists alone, A and B exist at the same time, and B exists alone. The character "/" generally indicates that the previous and next associated objects are in an "or" relationship. In the embodiments of the application, the term "multiple" refers to two or more, and other quantifiers are similar thereto.

In the embodiments of the present application, "determine B based on A" means that the factor A should be considered when determining B and it is not limited to "B may be determined based on A alone", but should also include: "determine B based on A and C", "determine B based on A, C and E", "determine C based on A, and further determine B based on C", and the like. It may also include taking A as a condition for determining B. For example, "When A meets a first condition, use the first method to determine B". For example, "When A meets a second condition, determine B", and the like. For example, "When A meets a third condition, determine B based on a first parameter", and the like. Of course, it may also be a condition that takes A as a factor for determining B. For example, "When A meets the first condition, use the first method to determine C, and further determine B based on C", and the like.

The UE involved in the embodiments of the present application may refer to a device that provide voice and/or data connectivity to users, a handheld device with wireless connectivity, or other processing device connected to a wireless modem, and the like. The type of UE includes a mobile phone, a vehicle user terminal, a tablet computer, a laptop, a personal digital assistant, a mobile internet device, a wearable device, and the like.

The network node involved in the embodiments of the present application may be a base station, which may include multiple cells providing services to terminals. Depending on the specific application scenario, the base station may also be referred to as an access point (AP) or may be a device in an access network that communicates with a wireless terminal node via one or more sectors over an air interface, or may be referred to other names. The network node may be used to interchange received air frames with internet protocol (IP) packets, acting as a router between the wireless terminal device and the rest of the access network, which may include an internet protocol (IP) communication network. The network node may also coordinate attribute management of the air interface. For example, the network node in the embodiments of the present application may be a base transceiver station (BTS) in a global system for mobile communication (GSM) or a code division multiple access (CDMA), a Node B in the wide-band code division multiple access (WCDMA), an evolutionary Node B (eNB or e-NodeB) in the long term evolution (LTE) system, a 5G base station (gNB) in the next generation system, a B5G base station in the beyond 5G (B5G) mobile communication system, a 6G base station in the 6G (6th Generation Mobile Communication Technology) network architecture, a relay node, a femto, a pico and a millimeter-wave base station in a home evolved NodeB (HeNB), and the like, and are not limited in the embodiments of the present application. In some network structures, the network device may include a centralized unit (CU) node and a distributed unit (DU) node, and the centralized unit and the distributed unit may also be geographically separated in arrangement.

The network device and the terminal device may each use one or more antennas for multiple input multiple output (MIMO) transmission. MIMO transmission may be either a single-user MIMO (SU-MIMO) or a multi-user MIMO (MU-MIMO). Depending on the form and number of antenna combinations, MIMO transmission may be a 2D-MIMO, a 3D-MIMO, a FD-MIMO, or a massive-MIMO, and may also be diversity transmission, precoding transmission, or beamforming transmission.

Those skilled in the art may understand that the embodiments of the present application may be provided as methods, systems, or computer program products. Thus, the embodiment of the present application may be in the form of a complete hardware, a complete software, or a combination of software and hardware. Furthermore, the present application may take the form of a computer program product implemented on one or more computer-usable storage media (including but not limited to a disk memory, an optical memory and the like) containing computer-usable program code.

The present application is described with reference to flowcharts and/or block diagrams of methods, devices (systems), and computer program products according to the embodiments of the present application. It should be understood that each process and/or block in the flowcharts and/or block diagrams, as well as combinations of the process and/or block in the flowcharts and/or block diagrams, may be implemented by computer-executable instructions. These computer-executable instructions may be provided to a processor of a general-purpose computer, a special-purpose computer, an embedded processor, or other programmable data processing device to produce a machine, so that the instructions executed by the processor of the computer or other programmable data processing device produce an apparatus for implementing the functions specified in one or more processes in the flowcharts and/or one or more blocks in the block diagrams.

These processor-executable instructions may also be stored in a processor-readable memory that may direct a computer or other programmable data processing device to operate in a specific manner, so that the instructions stored in the processor-readable memory produce a product including an instruction apparatus that implements the functions specified in one or more processes in the flowcharts and/or one or more blocks in the block diagrams.

These processor-executable instructions may also be loaded onto a computer or other programmable data processing device, so that a series of operational steps are executed on the computer or other programmable device to produce a process implemented by a computer, so that the instructions executed on the computer or other programmable device provide steps for implementing the functions specified in one or more processes in the flowcharts and/or one or more blocks in the block diagrams.

It may be apparent that those skilled in the art may make various modifications and variations to the present application without departing from the spirit and scope of the present application. Thus, if such modifications and variations fall within the scope of the claims of the present application and their equivalents, the present application is intended to encompass such modifications and variation.

## Claims

1. A segment routing internet protocol version 6, SRv6, data packet forwarding method, performed by an SRv6 node, comprising:
decapsulating an SRv6 data packet to obtain a user data message, wherein the decapsulating refers to removing an internet protocol version 6, IPv6, header from an SRv6 data packet header or removing an IPv6 header and a segment routing header, SRH, from the SRv6 data packet;
re-encapsulating the user data message, wherein a re-encapsulated SRv6 data packet comprises a new IPv6 header, or a new IPv6 header and a new SRH, and the new SRH is configured to indicate a new forwarding path for the re-encapsulated SRv6 data packet; and
forwarding the re-encapsulated SRv6 data packet to a next-hop node.

2. The SRv6 data packet forwarding method of claim 1, wherein re-encapsulating the user data message comprises:
encapsulating an address of the SRv6 node or a source address of the IPv6 header of the SRv6 data packet header before decapsulation as a source address of the new IPv6 header, encapsulating a segment identifier, SID, of the next-hop node in a segment list as a destination address of the new IPv6 header, and encapsulating the user data message with the new SRH.

3. The SRv6 data packet forwarding method of claim 2, wherein encapsulating the user data message with the new SRH comprises:
encapsulating all segment lists into the new SRH to obtain the re-encapsulated SRv6 data packet.

4. The SRv6 data packet forwarding method of claim 2, wherein encapsulating the user data message with the new SRH comprises:
encapsulating SIDs in the segment list except the SID of the next-hop node into the new SRH.

5. The SRv6 data packet forwarding method of claim 1, wherein re-encapsulating the user data message comprises:
encapsulating an address of the SRv6 node or a source address of the IPv6 header of the SRv6 data packet header before decapsulation as a source address of the new IPv6 header, encapsulating a segment identifier, SID, of the next-hop node in a segment list as a destination address of the new IPv6 header, and
not encapsulating the SRH in a case where one SID is comprised in the segment list.

6. The SRv6 data packet forwarding method of claim 1, wherein re-encapsulating the user data message comprises:
submitting the user data message to a specified SRv6 forwarding table; and
encapsulating the user data message with the new IPv6 header, or the new IPv6 header and the new SRH based on the SRv6 forwarding table, wherein the SRv6 forwarding table comprises a data packet matching rule and an SRv6 processing instruction, and the SRv6 processing instruction is used to indicate an encapsulation of the user data message.

7. The SRv6 data packet forwarding method of claim 1, wherein re-encapsulating the user data message comprises:
submitting the user data message to a logical interface; and
encapsulating the user data message with the new IPv6 header, or the new IPv6 header and the new SRH based on the logical interface.

8. The SRv6 data packet forwarding method of claim 7, wherein encapsulating the user data message with the new IPv6 header, or the new IPv6 header and the new SRH based on the logical interface, comprises:
encapsulating the user data message with the new IPv6 header, or the new IPv6 header and the new SRH based on an SRv6 forwarding table corresponding to the logical interface, wherein the SRv6 forwarding table comprises a data packet matching rule and an SRv6 processing instruction, and the SRv6 processing instruction is used to indicate an encapsulation of the user data message.

9. The SRv6 data packet forwarding method of any of claims 1 to 8, wherein the SRv6 node is a branching point user plane function, UPF, network element or an uplink classifier UPF network element in an edge computing scenario of a mobile network.

10. The SRv6 data packet forwarding method of any of claims 1 to 8, wherein the SRv6 node is a node in a distributed network unit or an autonomous domain in a distributed network scenario.

11. The SRv6 data packet forwarding method of any of claims 1 to 8, wherein the SRv6 node is a visited user plane function, V-UPF, network element or a home user plane function, H-UPF, network element between public land mobile networks, PLMNs, in a roaming scenario based on an SRv6 user plane.

12. A segment routing internet protocol version 6, SRv6, node, comprising a memory, a transceiver, and a processor, wherein
the memory is configured to store a computer program; the transceiver is configured to receive and transmit data under control of the processor; and the processor is configured to read the computer program in the memory and perform following operations:
decapsulating an SRv6 data packet to obtain a user data message, wherein the decapsulating refers to removing an internet protocol version 6, IPv6, header from an SRv6 data packet header or removing an IPv6 header and a segment routing header, SRH, from the SRv6 data packet;
re-encapsulating the user data message, wherein a re-encapsulated SRv6 data packet comprises a new IPv6 header, or a new IPv6 header and a new SRH, and the new SRH is configured to indicate a new forwarding path for the re-encapsulated SRv6 data packet; and
forwarding the re-encapsulated SRv6 data packet to a next-hop node.

13. The SRv6 node of claim 12, wherein re-encapsulating the user data message comprises:
encapsulating an address of the SRv6 node or a source address of the IPv6 header of the SRv6 data packet header before decapsulation as a source address of the new IPv6 header, encapsulating a segment identifier, SID, of the next-hop node in a segment list as a destination address of the new IPv6 header, and encapsulating the user data message with a new SRH.

14. The SRv6 node of claim 13, wherein encapsulating the user data message with the new SRH comprises:
encapsulating all segment lists into the new SRH to obtain the re-encapsulated SRv6 data packet.

15. The SRv6 node of claim 13, wherein encapsulating the user data message with the new SRH comprises:
encapsulating SIDs in the segment list except the SID of the next-hop node into the new SRH.

16. The SRv6 node of claim 12, wherein re-encapsulating the user data message comprises:
encapsulating an address of the SRv6 node or a source address of the IPv6 header of the SRv6 data packet header before decapsulation as a source address of the new IPv6 header, encapsulating a segment identifier, SID, of the next-hop node in a segment list as a destination address of the new IPv6 header, and
not encapsulating the SRH in a case where one SID is comprised in the segment list.

17. The SRv6 node of claim 12, wherein re-encapsulating the user data message comprises:
submitting the user data message to a specified SRv6 forwarding table; and
encapsulating the user data message with the new IPv6 header, or the new IPv6 header and the new SRH based on the SRv6 forwarding table, wherein the SRv6 forwarding table comprises a data packet matching rule and an SRv6 processing instruction, and the SRv6 processing instruction is used to indicate an encapsulation of the user data message.

18. The SRv6 node of claim 12, wherein re-encapsulating the user data message comprises:
submitting the user data message to a logical interface; and
encapsulating the user data message with the new IPv6 header, or the new IPv6 header and the new SRH based on the logical interface.

19. The SRv6 node of claim 18, wherein encapsulating the user data message with the new IPv6 header, or the new IPv6 header and the new SRH based on the logical interface, comprises:
encapsulating the user data message with the new IPv6 header, or the new IPv6 header and the new SRH based on an SRv6 forwarding table corresponding to the logical interface, wherein the SRv6 forwarding table comprises a data packet matching rule and an SRv6 processing instruction, and the SRv6 processing instruction is used to indicate an encapsulation of the user data message.

20. The SRv6 node of any of claims 12 to 19, wherein the SRv6 node is a branching point user plane function, UPF, network element or an uplink classifier UPF network element in an edge computing scenario of a mobile network.

21. The SRv6 node of any of claims 12 to 19, wherein the SRv6 node is a node in a distributed network unit or an autonomous domain in a distributed network scenario.

22. The SRv6 node of any of claims 12 to 19, wherein the SRv6 node is a visited user plane function, V-UPF, network element or a home user plane function, H-UPF, network element between public land mobile networks, PLMNs, in a roaming scenario based on an SRv6 user plane.

23. A segment routing internet protocol version 6, SRv6, data packet forwarding apparatus, comprising:
a first decapsulating module, configured to decapsulate an SRv6 data packet to obtain a user data message, wherein the decapsulating refers to removing an internet protocol version 6, IPv6, header from an SRv6 data packet header or removing an IPv6 header and a segment routing header, SRH, from the SRv6 data packet;
a first encapsulating module, configured to re-encapsulate the user data message, wherein a re-encapsulated SRv6 data packet comprises a new IPv6 header, or a new IPv6 header and a new SRH, and the new SRH is configured to indicate a new forwarding path for the re-encapsulated SRv6 data packet; and
a first forwarding module, configured to forward the re-encapsulated SRv6 data packet to a next-hop node.

24. The SRv6 data packet forwarding apparatus of claim 23, wherein the first encapsulating module comprises a first encapsulating submodule, wherein:
the first encapsulating submodule is configured to encapsulate an address of an SRv6 node or a source address of the IPv6 header of the SRv6 data packet header before decapsulation as a source address of the new IPv6 header, encapsulate a segment identifier, SID, of the next-hop node in a segment list as a destination address of the new IPv6 header, and encapsulate the user data message with the new SRH.

25. The SRv6 data packet forwarding apparatus of claim 24, wherein the first encapsulating submodule comprises a first encapsulating unit, wherein:
the first encapsulating unit is configured to encapsulate all segment lists into the new SRH to obtain the re-encapsulated SRv6 data packet.

26. The SRv6 data packet forwarding apparatus of claim 24, wherein the first encapsulating submodule comprises a second encapsulating unit, wherein:
the second encapsulating unit is configured to encapsulate SIDs in the segment list except the SID of the next-hop node into the new SRH.

27. The SRv6 data packet forwarding apparatus of claim 23, wherein the first encapsulating module comprises a second encapsulating submodule, wherein:
the second encapsulating submodule is configured to encapsulate an address of an SRv6 node or a source address of the IPv6 header of the SRv6 data packet header before decapsulation as a source address of the new IPv6 header, encapsulate a segment identifier, SID, of the next-hop node in a segment list as a destination address of the new IPv6 header, and
not encapsulate the SRH in a case where one SID is comprised in the segment list.

28. The SRv6 data packet forwarding apparatus of claim 23, wherein the first encapsulating module comprises a first processing submodule and a third encapsulating submodule, wherein:
the first processing submodule is configured to submit the user data message to a specified SRv6 forwarding table; and
the third encapsulating submodule is configured to encapsulate the user data message with the new IPv6 header, or the new IPv6 header and the new SRH based on the SRv6 forwarding table, wherein the SRv6 forwarding table comprises a data packet matching rule and an SRv6 processing instruction, and the SRv6 processing instruction is used to indicate an encapsulation of the user data message.

29. The SRv6 data packet forwarding apparatus of claim 23, wherein the first encapsulating module comprises a second processing submodule and a fourth encapsulating submodule, wherein:
the second processing submodule is configured to submit the user data message to a logical interface; and
the fourth encapsulating submodule is configured to encapsulate the user data message with the new IPv6 header, or the new IPv6 header and the new SRH based on the logical interface.

30. The SRv6 data packet forwarding apparatus of claim 29, wherein the fourth encapsulating submodule comprises a third encapsulating unit, wherein:
the third encapsulating unit is configured to encapsulate the user data message with the new IPv6 header, or the new IPv6 header and the new SRH based on a SRv6 forwarding table corresponding to the logical interface, wherein the SRv6 forwarding table comprises a data packet matching rule and an SRv6 processing instruction, and the SRv6 processing instruction is used to indicate an encapsulation of the user data message.

31. The SRv6 data packet forwarding apparatus of any of claims 23 to 30, wherein an SRv6 node is a branching point UPF, user plane function, network element or an uplink classifier UPF network element in an edge computing scenario of a mobile network.

32. The SRv6 data packet forwarding apparatus of any of claims 23 to 30, wherein an SRv6 node is a distributed network unit in a distributed network scenario or a node in an autonomous domain.

33. The SRv6 data packet forwarding apparatus of any of claims 23 to 30, wherein an SRv6 node is a visited user plane function, V-UPF, network element or a home user plane function, H-UPF, network element between public land mobile networks, PLMNs, in a roaming scenario based on an SRv6 user plane.

34. A computer-readable storage medium storing a computer program, wherein the computer program is configured to cause a computer to execute the SRv6 data packet forwarding method of any of claims 1 to 11.
